# EUROPEAN PATENT APPLICATION

(11) **EP 0 769 447 A1**
(43) Date of publication of application: **23.04.1997**
(21) Application number: 96116759.0
(22) Date of filing: 18.10.1996
(51) Int. Cl.: B62K 25/28

(54) **Bicycle frame**

(30) Priority: 19.10.1995 JP 294949/95
(71) Applicant: MIYATA INDUSTRY CO., LTD., Chigasaki-shi, Kanagawa-ken (JP)
(72) Inventor: Takagaki, Makoto, c/o Miyata Industry Co., Ltd., Chigasaki-shi (JP); Sakurabayashi, Norio, c/o Miyata Industry Co.,Ltd., Chigasaki-shi (JP)
(74) Representative: Tiedtke, Harro, Dipl.-Ing.

(57) **Abstract**

A bicycle frame has a front chassis (20) adapted to support thereon a handle bar (46), a front wheel (51) and a seat, and including a crank bearing adapted to support therein a drive crank in a rotatable manner so that the rear wheel is driven by the drive crank, a rear chassis including a rear wheel support portion adapted to support thereon a rear wheel, a pivot bearing (32) arranged between the front chassis (20) and the rear chassis to allow relative rotation between the front chassis and the rear chassis around a substantially horizontal axis of the pivot bearing (32), and a shock absorber (38) arranged between the front chassis and the rear chassis to absorb a kinetic energy of the relative rotation.

## Description

### Background of the Invention and Related Art Statement

The present invention relates to a bicycle frame with a wheel suspension shock absorber.

A prior art bicycle frame as disclosed by JP-U-6-1175, has a front chassis for receiving therein a handle bar, a front wheel, a seat and a rear wheel drive crank, a rear chassis for receiving therein a rear wheel, a pivot bearing for relative rotation between the front chassis and the rear chassis, and a shock absorber linkage for restraining a movement of the rear wheel.

### Object and Summary of the Invention

An object of the present invention is to provide a bicycle frame with a large shock absorber capacity for a rear wheel movement.

According to the present invention, a bicycle frame comprises,
a front chassis adapted to support thereon a handle bar, a front wheel and a seat, and including a crank bearing adapted to support therein a drive crank in a rotatable manner so that the rear wheel is driven by the drive crank,
a rear chassis including a rear wheel support portion adapted to support thereon a rear wheel,
a pivot bearing arranged between the front chassis and the rear chassis to allow relative rotation between the front chassis and the rear chassis around a substantially horizontal axis of the pivot bearing, and
a shock absorber arranged between the front chassis and the rear chassis to absorb a kinetic energy of the relative rotation.

Since the pivot bearing is arranged between the front chassis and the rear chassis in such a manner that a distance between the substantially horizontal axis and the rear wheel support portion is sufficiently large, a vertical movement range of the rear wheel support portion is kept large to obtain the large shock absorber capacity for the rear wheel movement.

If the crank bearing is arranged between the pivot bearing and the rear wheel support portion in a bicycle proceeding direction, the distance between the substantially horizontal axis and the rear wheel support portion is securely kept sufficiently large.

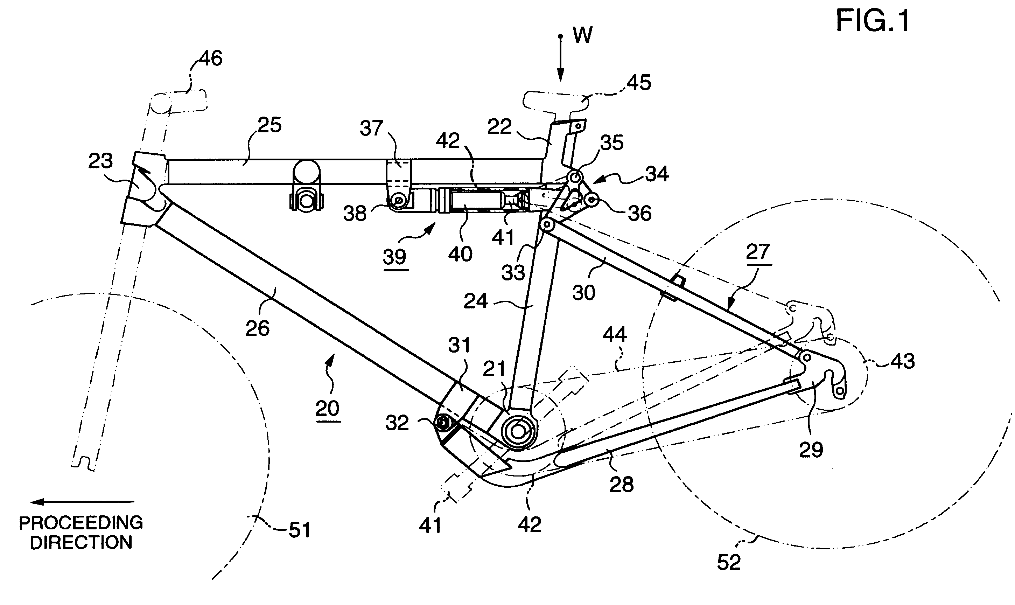

If the pivot bearing is arranged between the front chassis and the rear chassis in such a manner that a center of gravity W of a bicyclist is held between the substantially horizontal axis and the rear wheel support portion in a bicycle proceeding direction (as shown in Fig. 1) even when the rear wheel is driven by the bicyclist, a horizontal position of the rear wheel support portion is kept stable so that the a bicycle proceeding direction is desirably controlled.

It is preferable that the rear chassis extends below the crank bearing so that the rear chassis is connected to the pivot bearing between the front wheel and the crank bearing in the bicycle proceeding direction, whereby the distance between the substantially horizontal axis and the rear wheel support portion is sufficiently large to keep the vertical movement range of the rear wheel support portion large for obtaining the large shock absorber capacity for the rear wheel movement.

### Brief Description of the Drawings

Fig. 1 is a side view of a bicycle frame according to the present invention.

### Detailed Description of Preferred Embodiments

As shown in Fig. 1, a bicycle frame of the present invention is constituted by a front chassis 20 and a rear chassis 27. The front chassis 20 has a head tube 23 for supporting rotatably therein a handle bar 46 on which a front wheel 51 is mounted, an upright pipe 24 with a seat lag 22 for holding thereon a seat 45, an upper pipe 25 extending between the head tube 23 and the seat lag 22, and a lower pipe 26 extending between the head tube 23 and the upright pipe 24. The upright pipe 24 includes a crank bearing 21 for supporting rotatably therein a drive crank 41 at a lower end thereof.

The rear chassis 27 has a connecting arm 30, and a chain stay 28 extending between a pivot bearing pin 32 and a rear wheel support end 29 for supporting rotatably therein a rear wheel 52. The front chassis 20 and the chain stay 28 is connected to each other rotatably on a substantially horizontal axis by the pivot bearing pin 32 and a pivot bearing mounting member 31 fixed to the lower pipe 26 and receiving rotatably the pivot bearing pin 32.

A relative rotation between the front chassis 20 and the rear chassis 27 is restrained by a shock absorber unit 39 and a linkage 34. One of ends of the shock absorber unit 39 is connected rotatably to the upper pipe 25 of the front chassis 20 through a hinge stay 37 fixed onto the upper pipe 25 and a pin 38 received by the one of the ends, and another one of the ends is connected swingably to a linkage point 36 of the linkage 34 swingably connected to the seat lag 22 at a linkage point 35. A linkage point 33 of the linkage 34 is swingably connected to an end of the connecting arm 30. The shock absorber unit 39 may have between the ends a coil compression spring 42 and a hydraulic cylinder 41 whose hydraulic flow therein is throttled so that at least an expansion between the ends is restrained in a viscoelastic manner. The shock absorber unit 39 may be a frictional-and-elastic shock absorber.

The rear wheel 52 is driven by the drive crank 41 through a chain sprocket 42 fixed coaxially to the drive crank 41, a chain sprocket 43 fixed coaxially to the rear wheel 52 and a chain 44 extending between the chain sprockets 43 and 44.

The shock absorber unit 39 absorbs by viscosity or friction therein a kinetic energy of the relative rotation between the front chassis 20 and the rear chassis 27 when the rear wheel 52 moves upward relative to the front chassis 21.

A bicycle frame has a front chassis adapted to support thereon a handle bar, a front wheel and a seat, and including a crank bearing adapted to support therein a drive crank in a rotatable manner so that the rear wheel is driven by the drive crank, a rear chassis including a rear wheel support portion adapted to support thereon a rear wheel, a pivot bearing arranged between the front chassis and the rear chassis to allow relative rotation between the front chassis and the rear chassis around a substantially horizontal axis of the pivot bearing, and a shock absorber arranged between the front chassis and the rear chassis to absorb a kinetic energy of the relative rotation.

## Claims

1. A bicycle frame comprising,
a front chassis adapted to support thereon a handle bar, a front wheel and a seat, and including a crank bearing adapted to support therein a drive crank in a rotatable manner so that the rear wheel is driven by the drive crank,
a rear chassis including a rear wheel support portion adapted to support thereon a rear wheel,
a pivot bearing arranged between the front chassis and the rear chassis to allow relative rotation between the front chassis and the rear chassis around a substantially horizontal axis of the pivot bearing, and
a shock absorber arranged between the front chassis and the rear chassis to absorb a kinetic energy of the relative rotation.

2. A bicycle frame according to claim 1, wherein the crank bearing is arranged between the pivot bearing and the rear wheel support portion in a bicycle proceeding direction.

3. A bicycle frame according to claim 1, wherein the pivot bearing is arranged between the front chassis and the rear chassis in such a manner that a center of gravity of a bicyclist is held between the substantially horizontal axis and the rear wheel support portion in a bicycle proceeding direction even when the rear wheel is driven by the bicyclist.

4. A bicycle frame according to claim 1, wherein the rear chassis extends below the crank bearing so that the rear chassis is connected to the pivot bearing between the front wheel and the crank bearing in a bicycle proceeding direction.
